# FASCICULE DE BREVET EUROPEEN

(11) **EP 0 403 316 B1**
(45) Date de publication et mention de la délivrance du brevet: **20.07.1994**
(21) Numéro de dépôt: 90400990.9
(22) Date de dépôt: 11.04.1990
(51) Int. Cl.: B02C 18/12, B02C 23/34, D21B 1/08

(54) **Machine à déchiqueter**
Zerkleinerungsmaschine
Shredding machine

(30) Priorité: 14.04.1989 FR 8904963
(43) Date de publication de la demande: 19.12.1990
(73) Titulaire: INNODEX INDUSTRIE, F-93200 Saint Denis (FR)
(72) Inventeur: Galvier, Christian, F-91100 Corbeil Essonnes (FR); Fiks, Julien, F-75009 Paris (FR)
(74) Mandataire: Colas, Jean-Pierre

(56) Documents cités:
- DE-A- 1 813 501
- FR-A- 2 141 089
- FR-A- 2 238 533
- US-A- 4 812 205
- SOVIET INVENTIONS ILLUSTRATED, semaine 8826, 2 juillet 1988, section P, classe
- P41, résumé no. 88-181681/26,Derwent publications L & SU-A-1357070(SMYSLOV) 07-12-1987

## Description

La présente invention a pour objet une machine à déchiqueter des produits de faible résistance, notamment des produits fibreux tels que du papier. Elle peut également s'appliquer à de très nombreux autres produits et, compte tenu de ses caractéristiques techniques, être utilisée pour déchiqueter des produits présentant une résistance macanique relativement importante.

Les machines à déchiqueter selon la présente invention comportent un compartiment qui reçoit les produits à déchiqueter. A l'intérieur, et généralement vers le fond du compartiment, sont disposées des lames de couteaux ou équivalent tournant à grande vitesse autour d'un axe généralement vertical. Le fond du compartiment est équipé d'une grille ou bien d'ouvertures calibrées ou équivalent par où s'échappent les particules après déchiquetage. Les brevets français FR-A-1 116 406 et 1 297 905 decrivent des machines qui ne conviennent que pour la destruction de produits présentant une faible résistance.

Les machines selon l'art antérieur dérivant de celles décrites dans ces deux brevets présentent également, dans de nombreux cas, un dispositif d'extraction qui aspire l'air et les particules à la sortie de la grille pour envoyer les particules vers un récipient de récupération, l'air étant séparé par tout moyen adéquat. Ce système présente l'inconvénient d'exercer une contrepression élevée à l'intérieur du compartiment, ce qui encrasse les systèmes de filtrage et réduit progressivement le débit de matière recueillie et donc de matière traitée. Par ailleurs, la quasi-totalité de ces machines dégage une poussière extrêmement importante et toutes les précautions prises, comme par exemple l'emploi de couvercles étanches et d'autres systèmes d'aspiration n'ont donné jusqu'ici que des résultats relativement décevants et très coûteux.

On a également proposé dans l'art antérieur (FR-A-2 238 533) d'aspirer dans le compartiment une partie de l'air mais cette aspiration a pour effet de créer au refoulement une contrepression trop forte qui peut engendrer une aspiration vers le haut de l'air du compartiment et de son contenu, ce qui bien entendu diminue d'autant la capacité de déchiquetage des lames de couteaux.

La présente invention a donc pour but essentiel de maintenir le débit de déchiquetage et d'éviter le blocage des grilles ou tamis ou filtres présents dans l'installation et, par ailleurs, d'empêcher le dégagement intempestif de poussières. Pour ce faire, la présente invention a recours à un certain nombre de moyens dont la combinaison permet de parvenir aux résultats mentionnés.

La présente invention a pour objet une machine à déchiqueter et à broyer selon la revendication 1.

Selon un autre mode de réalisation de la machine suivant l'invention, la sortie d'air du cyclone en retour vers le compartiment est équipée d'un filtre grossier et à faible perte de charge tel qu'une grille.

Selon encore un autre mode de réalisation de la machine suivant l'invention, l'entrée de recyclage de l'air dans la partie haute du compartiment est susceptible d'être fermée par un obturateur fonctionnant en clapet anti-retour dans le sens de l'entrée de l'air dans le compartiment.

Suivant une forme d'éxécution de la machine selon l'invention, l'entrée d'air de recyclage dans la partie haute du compartiment est susceptible d'être obturée par un obturateur commandé de l'extérieur. Les outils de déchiquetage sont en général montés sur le même axe que le rotor du ventilateur.

Suivant une autre forme encore d'exécution de la machine selon l'invention, le clapet d'entrée dans le sas est rappelé en position de fermeture par un organe tel qu'un ressort ou un contrepoids agissant à l'encontre de la dépression créée dans le sas par l'aspirateur.

Le rotor de l'aspirateur de poussière peut être monté sur le même axe que le rotor du ventilateur et les outils de déchiquetage et être équipé de moyens de temporisation mécanique tels qu'une masse d'inertie et une roue libre lui permettant de continuer à tourner temporairement après l'arrêt du rotor du ventilateur.

Lorsque le rotor de l'aspirateur de poussière et le rotor du ventilateur sont entraînés par des moteurs séparés, on peut prévoir des moyens de temporisation aptes à faire continuer temporairement la rotation du rotor de l'aspirateur de poussière après l'arrêt du rotor du ventilateur.

Selon encore un autre mode de réalisation de l'invention, la section de la ou les ouverture(s) prévue(s) au fond du compartiment est réglable.

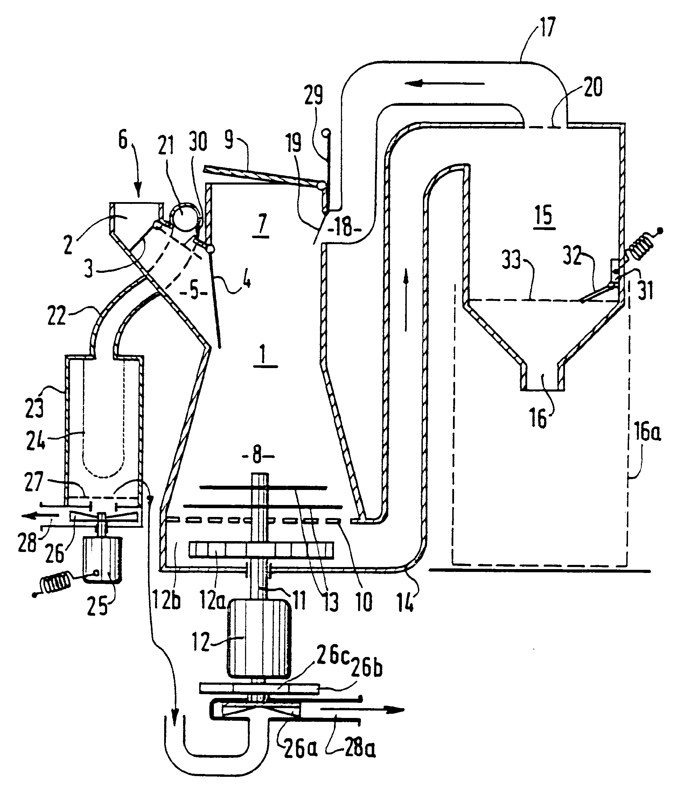

Pour mieux faire comprendre les caractéristiques techniques et les avantages de la présente invention, on va en décrire un exemple de réalisation, étant bien entendu que celui-ci n'est pas limitatif quant à son mode de mise en oeuvre et aux applications que l'on peut en faire. On se reportera à la figure unique qui représente, très schématiquement, en coupe une machine à déchiqueter conforme à la présente invention.

La machine représentée comprend essentiellement un compartiment 1, de préférence de section rectangulaire, dans lequel on déverse les produits à déchiqueter par une goulotte 2 présentant deux clapets 3 et 4 entre lesquels est ainsi défini un sas 5. Ces deux clapets ouvrent vers l'intérieur du compartiment 1 pour le clapet 4 et du sas 5 pour le clapet 3. Le clapet 4 peut retomber sur son siège sensiblement vertical par simple gravité et/ou à l'aide d'un organe de rappel tel qu'un ressort ou un contrepoids et de la dépression qui est créé dans le sas 5 dans des conditions qui seront expliquées ci-après. Le clapet 3 peut revenir dans la position représentée sur la figure grâce à un ressort de rappel (non représenté sur la figure) agissant à l'encontre de la dépression dans le sas 5 ou sous l'action de la gravité agissant sur un clapet 30 d'isolation de l'aspiration 21 qui sera décrite par la suite. Lorsque l'on introduit les produits à déchiqueter dans la gueule 6 de la goulotte, on ouvre successivement les clapets 3 et 4 tout en faisant communiquer l'aspiration 21 avec le sas 5.

Le compartiment 1 présente une partie haute 7 généralement prismatique et une partie évasée en tronc de pyramide vers le bas en 8. La partie haute 7 est fermée par un couvercle étanche 9 qui, en service normal de broyage, reste fermé mais que l'on peut ouvrir pour des travaux d'entretien et des dégagements en cas de blocage. Ce couvercle 9 est bien entendu muni de systèmes de sécurité de façon à arrêter le fonctionnement de la machine à l'ouverture du couvercle ou à empêcher l'ouverture du couvercle quand la machine fonctionne. La partie basse 8 du compartiment 1 est fermée par une grille 10 (ou un système équivalent) munie d'ouvertures calibrées et le cas échéant réglables et traversée par un axe 11 tournant à grande vitesse de rotation, entraîné par un moteur 12. La vitesse de rotation de ce moteur est définie par les conditions d'emploi mais elle est de préférence de plusieurs milliers de tours par minute. L'axe 11 porte des lames de couteaux 13 ou équivalent dans la partie située au-dessus de la grille 10 et un rotor 12a d'un ventilateur centrifuge 12b qui participe à l'aspiration de l'air et des particules de matières déchiquetées par les couteaux 13 et qui traversent les orifices calibrés de la grille 10. Ces particules sont propulsées par le rotor 12a dans une conduite 14 les amenant tangentiellement dans un cyclone 15 où elles sont recueillies vers le bas en 16 dans tout récipient adéquat tel qu'un sac 16a posé sur le sol et emmanché sur le corps du cyclone 15, l'air séparé s'échappant par la conduite de recyclage 17 pour être recyclé en 18 dans la partie haute 7 du compartiment 1.

L'entrée 18 dans cette partie haute peut comporter un clapet anti-retour 19 de la conduite de recyclage 17 ou tout autre obturateur commandé à la main par un levier 29 ou automatiquement. La circulation de l'air par la canalisation 14, le cyclone 15, la conduite 17, l'entrée 18 est assurée par le rotor à aubages 12a du ventilateur 12b. Cet air est bien entendu progressivement chargé de poussières et on peut prévoir dans la partie haute du cyclone 15 un système de grille schématiquement représenté en 20 qui retient les plus grosses particules et les empêche de remonter par la conduite 17, mais cette grille ne doit pas être fine sinon la perte de charge empêcherait le recyclage de l'air, aussi ne peut-on éviter de recycler avec l'air une partie non négligeable des poussières. A la partie supérieure du sas 5, est prévue une hotte aspirante 21 qui est reliée par une conduite 22 à un aspirateur 23 de tout type classique et notamment à un aspirateur comportant un sac 24 jetable ou réutilisable. L'aspirateur peut présenter une structure classique avec un moteur extérieur séparé 25 et un rotor de ventilateur d'aspiration 26 protégé par une grille 27. Le sac 24 est interchangeable par tout moyen classique non représenté sur la figure, l'air traversant le sac 24 sortant en partie basse 28 de l'ensemble aspirateur.

En variante et comme représenté à la partie inférieure de la figure, le moteur séparé 25 peut être supprimé et le rotor 26a du ventilateur d'aspiration 23 est alors monté directement sur l'axe 11 du moteur 12 des lames de couteaux 13. Afin de faire en sorte que le rotor 26a continue à tourner temporairement après l'arrêt de l'axe 11, on peut monter sur ce rotor 26a une masse d'inertie 26b assez importante et intercaler entre l'arbre 11 et le rotor 26a une roue libre 26c autorisant la libre rotation du rotor d'aspiration 26a en survitesse par rapport à l'axe 11.

Dans le mode de réalisation de la figure, l'ensemble aspirateur 24, 26 est situé sous la goulotte d'entrée 2 mais on peut avoir intérêt, pour des raisons de commodité, à le placer ailleurs, notamment de l'autre côté du compartiment 1. En conséquence, lorsque l'aspirateur 23 fonctionne, l'air aspiré en 21 dans le sas 5 crée une dépression, qui tend à entrouvrir le clapet 3 de sorte que lorsque l'on charge en 6 des matières qui vont nécessairement faire ouvrir le clapet 3 puis le clapet 4, une partie de l'air empoussiéré contenue dans le compartiment 1 va s'échapper dans le sas 5 et être aspirée en 21, de sorte que la poussière est retenue dans le sac 24 tandis que l'air aspiré s'échappe en 28 vers l'extérieur.

Ce système d'aspiration peut, bien entendu, ne fonctionner que lors des opérations de chargement si la fermeture du clapet 4 s'avère suffisante pour empêcher toute remontée de poussière du compartiment par le sas 5 vers l'extérieur. Dès que l'on opère un chargement, la poussière s'échappant du compartiment 1 est aspirée en 21 et est éliminée. Même si le chargement est long et important, on élimine toute la poussière provoquée au cours du chargement. On notera que la dépression créée dans le sas 5 n'est transmise au compartiment 1 que lorsque le clapet 4 est ouvert, c'est-à-dire pendant les périodes de chargement, ce qui ne gêne pas le fonctionnement du déchiquetage comme c'était le cas dans certains dispositifs de l'art antérieur où l'aspiration se faisait directement dans la partie haute du compartiment 1 telle que représentée sur la figure, ce qui tendait à faire remonter les matières à déchiqueter hors du contact avec les couteaux et à diminuer le rendement. On peut également envisager le fonctionnement de l'aspirateur 23 pendant toute la période de fonctionnement de la déchiqueteuse et, en particulier, du moteur 12.

Selon un mode de réalisation avantageux, le clapet 3 est relié à un clapet perpendiculaire 30 apte à isoler partiellement, du sas 5 de chargement, l'aspiration de la hotte 21 aussi longtemps que le clapet 3 n'est pas ouvert, le clapet 30 servant en outre de contrepoids de rappel en position de fermeture pour le clapet 3.

On remarquera qu'en faisant varier la vitesse de rotation du moteur et les lames utilisées on peut obtenir des résultats extrêmement différents au déchiquetage. On sait par exemple qu'à des vitesses de l'ordre de 3 000 tr/mn ou au-delà, avec des lames en acier, on parvient non seulement à déchiqueter des matières fibreuses mais même des matières plastiques ou des objets métalliques d'épaisseur relativement faible. La forme des lames 13 ou équivalents qui peuvent être des morceaux de câbles métalliques ou des lanières définit les conditions de déchiquetage et notamment de l'agitation dans le fond 8 du compartiment 1. Il est donc possible de combiner un certain nombre d'outils de déchiquetage et de leur donner une forme qui évite, en particulier, l'amoncellement de matériaux non traités sur la grille 10 qui a tendance à être obturée du fait de l'aspiration par la turbine 12. C'est pourquoi, on a intérêt à disposer les lames de couteaux le plus près possible du fond 8, c'est-à-dire au voisinage de la grille 10, pour éviter des amoncellements éventuels surtout si, parmi les papiers ou les produits relativement légers qui seront facilement agités en suspension dans l'air, se trouvent des particules métalliques.

Il est bien connu que, dans les machines à déchiqueter le papier, on trouve souvent des attaches métalliques, des agrafes et autres accessoires qu'il convient de déchiqueter ou d'évacuer et qui ne doivent pas, du fait de leur densité plus élevée, stagner sur la grille 10. C'est pourquoi, en tout état de cause, par le couvercle 9, il est utile d'avoir accès à l'intérieur du compartiment 1, lorsque l'on arrête la machine, de façon à dégager les éventuels résidus résistants pouvant rester sur cette grille. Il est évident que l'on ne doit pas remplir le compartiment 1 en partie haute, d'une part parce que l'entassement réduit le rendement des outils de déchiquetage mais, également, du fait que l'on pourrait bloquer l'ouverture de la trappe 4 au moment du chargement. On a intérêt à remplir très progressivement, au fur et à mesure de la sortie des particules déchiquetées en 16. Comme le sait l'homme de l'art, on doit toujours proportionner les caractéristiques techniques de la machine à la quantité de matières à traiter.

Par ailleurs, il est évident que l'on a intérêt à prévoir un certain nombre de sécurités. On peut prévoir un capteur de tout type classique indiquant le niveau supérieur de matières solides se trouvant dans le compartiment 1 de façon à empêcher l'introduction de nouveaux produits lorsque ce niveau atteint une cote limite, c'est-à-dire en-dessous du bas de la partie basse du clapet 4. On peut prévoir également un capteur 31 monté sur le cyclone 15 et dont le bras 32 indiquera quand le remplissage du cyclone 15 ou du sac collecteur 16a dépasse le niveau admissible 33. Il est évident également qu'il est utile de détecter toute surchauffe éventuelle dans l'ensemble de l'installation, ce qui peut être fait relativement facilement à l'aide de quelques capteurs thermiques. Il est évident également que l'on a intérêt à surveiller l'échauffement du moteur ou toute surintensité du moteur et que l'on peut déclencher un arrêt par tout moyen classique.

L'ensemble du dispositif représenté sur la figure unique peut être disposé en étant monté dans un bâti de tout type classique fermé par une carrosserie de protection, dont le rôle sera également de limiter à la fois les inconvénients dus au bruit et à la propagation des poussières pouvant, malgré toutes les précautions, s'échapper de l'installation. On peut avoir intérêt, par exemple, à placer des filtres légers, par exemple des filtres en papier ou en tissu, aux points de communication et en particulier aux entrée et sortie d'air pour limiter les éventuels refoulements de poussières. On peut donner au compartiment une forme constituée par une partie haute cylindrique et une partie basse tronconique, l'ensemble étant de révolution, mais il est évident que l'on peut aussi lui donner de nombreuses autres formes, compte tenu en particulier des matières que l'on désire déchiqueter. On peut avoir intérêt à ce que la partie basse qui, sur la figure, est tronconique évasée vers le bas soit, au contraire, évasée vers le haut pour concentrer la matière vers les couteaux 13 et il est évident que, lorsque l'on veut réduire en particules des matières plastiques ou certains produits végétaux, on peut avoir à travailler dans des conditions totalement différentes de celles qui sont classiques pour la destruction de documents.

L'expérience a montré qu'avec une machine du type décrit dans l'exemple ci-dessus, il est possible de détruire des documents non dégrafés ou non déliassés, y compris des ensembles relativement importants en volume tels que par exemple, des annuaires téléphoniques. Avec les machines de l'art antérieur, on ne parvenait pas à de tels résultats malgré un dégagement de chaleur et de poussière considérable, sans compter le bruit qui constituait un ensemble d'inconvénients particulièrement gênants pour l'environnement. Les avantages ainsi tirés de la présente invention s'ajoutent au fait que les machines de ce type permettent à la fois de déchiqueter certains matériaux et d'en broyer d'autres, dans des conditions extrêmement similaires. Le caractère très polyvalent de la machine est donc un avantage largement supplémentaire.

## Revendications

1. Machine à déchiqueter et à broyer comportant un compartiment (1) dans lequel on fait pénétrer les produits à traiter et qui est équipé, en partie haute (7), d'une ouverture d'accès fermée de manière étanche par un couvercle (9), au voisinage du fond, d'outils tournants de déchiquetage et/ou de broyage (13), et au fond, d'au moins une ouverture calibrée laissant passer vers le bas les particules obtenues, la machine comprenant en outre, sous le fond perforé du compartiment (1), un ventilateur (12b) qui aspire l'air et les particules issues du compartiment et produites par les outils de déchiquetage, et une conduite (14) qui relie la sortie du ventilateur (12b) à un cyclone (15) où les particules sont recueillies en partie inférieure et où l'air, recueilli en partie supérieure, peut être recyclé en partie haute (7) du compartiment par l'intermédiaire d'une conduite de recyclage (17), caractérisée en ce que ladite machine comprend, en parallèle avec ladite ouverture d'accès, une goulotte (2) de déversement des produits à traiter dans ledit compartiment (1), ladite goulotte (2) comprenant deux clapets (3,4) normalement fermés délimitant entre eux un sas (5) et agencés pour être ouverts l'un après l'autre par les produits à traiter lors de leur déversement dans ledit compartiment (1), le sas ainsi formé présentant une hotte d'aspiration (21) reliée à un aspirateur de poussières (23) muni d'un sac filtrant (24).

2. Machine selon la revendication 1, caractérisée en ce que la sortie d'air du cyclone (15) en retour vers le compartiment (1) est équipée d'un filtre grossier et à faible perte de charge (20) tel qu'une grille.

3. Machine selon l'une des revendications 1 ou 2, caractérisée en ce que l'entrée de recyclage (18) de l'air dans la partie haute (7) du compartiment (1) est susceptible d'être fermée par un obturateur (19) fonctionnant en clapet anti-retour dans le sens de l'entrée de l'air dans le compartiment (1).

4. Machine selon l'une des revendications 1 à 3, caractérisée en ce que l'entrée d'air de recyclage (18) dans la partie haute (7) du compartiment (1) est susceptible d'être obturée par un obturateur (29) commandé de l'extérieur.

5. Machine selon l'une des revendications 1 à 4, caractérisée en ce que le clapet d'entrée (3) dans le sas (5) est rappelé en position de fermeture par un organe tel qu'un ressort ou un contre-poids agissant à l'encontre de la dépression créée dans le sas (5) par l'aspirateur (23).

6. Machine selon l'une des revendications 1 à 5, caractérisée en ce que le rotor (26a) de l'aspirateur de poussière (23) est monté sur le même axe (11) que le rotor (12a) du ventilateur et les outils de déchiquetage (13).

7. Machine selon la revendication 6, caractérisée en ce que le rotor (26a) de l'aspirateur de poussière est équipé de moyens de temporisation mécanique tels qu'une masse d'inertie (26a) et une roue libre (26c) lui permettant de continuer à tourner temporairement après l'arrêt du rotor (12a) du ventilateur.

8. Machine selon l'une des revendications 1 à 5, caractérisée en ce que, lorsque le rotor (26a) de l'aspirateur de poussière et le rotor (12a) du ventilateur sont entraînés par des moteurs séparés (12, 25), il est prévu des moyens de temporisation aptes à faire continuer temporairement la rotation du rotor (26a) de l'aspirateur de poussière après l'arrêt du rotor (12a) du ventilateur (12b).

9. Machine selon l'une des revendications 1 à 8, caractérisé en ce que l'ouverture ménagée au fond (10) du compartiment (1) est réglable.

## Patentansprüche

1. Maschine zum Zerkleinern und zum Zermahlen, die einen Behälter (1) aufweist, in den man die zu behandelnden Erzeugnisse hindurchlaufen läßt und der in seinem oberen Teil (7) mit einer in abgedichteter Weise durch einen Verschlußdeckel (9) geschlossenen Zugangsöffnung, in der Nähe des Bodens mit drehbaren Werkzeugen (13) zum Zerkleinern und/oder Zermahlen und am Boden mit mindestens einer kalibrierten Öffnung versehen ist, die die erhaltenen Partikel nach unten hindurchtreten läßt, und welche Maschine außerdem unter dem perforierten Boden des Behälters (1) einen Ventilator (12b), der die Luft und die vom Behälter abgegebenen und durch die Zerkleinerungswerkzeuge erzeugten Partikel absaugt, sowie eine Leitung (14) aufweist, die den Ausgang des Ventilators (12b) mit einem Zyklon (15) verbindet, wo die Partikel im unteren Teil aufgenommen werden und wo die im oberen Teil aufgenommene Luft in den oberen Teil (7) des Behälters mit Hilfe einer Rückführungsleitung (17) zurückgeführt werden kann, dadurch gekennzeichnet, daß die Maschine parallel zu der Zugangsöffnung einen Eingabekanal (2) für die zu behandelnden Erzeugnisse in den Behälter (1) aufweist, wobei dieser Eingabekanal (2) zwei Verschlußklappen (3,4) aufweist, die normalerweise geschlossen sind und zwischen einander eine Schleuse (5) begrenzen und so eingerichtet sind, daß sie, eine nach der anderen, durch die zu behandelnden Erzeugnisse bei deren Eingabe in den Behälter (1) geöffnet werden, wobei die so gebildete Schleuse einen Saugabzug (21) aufweist, der mit einem Staubsauggebläse (23) verbunden ist, das mit einem Filterbeutel (24) versehen ist.

2. Maschine nach Anspruch 1, dadurch gekennzeichnet, daß der Luftauslaß des Zyklons (15) in Richtung zurück zum Behälter (1) mit einem groben und verlustarmen Filter (20), z.B. einem Gitter, versehen ist.

3. Maschine nach Anspruch 1 oder 2, dadurch gekennzeichnet, daß der Einlaß (18) für die Luftrückführung in den oberen Teil (7) des Behälters (1) verschließbar ist durch einen als Rückschlagventil in Richtung eines Lufteinlasses in den Behälter (1) wirkenden Verschluß (19).

4. Maschine nach einem der Ansprüche 1 bis 3, dadurch gekennzeichnet, daß der Einlaß (18) für die Luftrückführung in den oberen Teil (7) des Behälters (1) verschließbar ist durch einen von außen betätigten Verschluß (29).

5. Maschine nach einem der Ansprüche 1 bis 4, dadurch gekennzeichnet, daß die Verschlußklappe (3) für den Einlaß in die Schleuse (5) in die Schließlage zurückgeführt wird durch ein Organ, z.B. eine Feder oder ein Gegengewicht, das gegen den Unterdruck wirkt, der in der Schleuse (5) durch das Staubsauggebläse (23) erzeugt wird.

6. Maschine nach einem der Ansprüche 1 bis 5, dadurch gekennzeichnet, daß der Rotor (26a) des Staubsauggebläses (23) auf der gleichen Achse (11) wie der Rotor (12a) des Ventilators und die Zerkleinerungswerkzeuge (13) angeordnet ist.

7. Maschine nach Anspruch 6, dadurch gekennzeichnet, daß der Rotor (26a) des Staubsauggebläses mit mechanischen Verzögerungsmitteln versehen ist, z.B. einer Schwungmasse und einem Freilauf (26c), die ihm erlauben, die Drehung vorübergehend fortzusetzen nach dem Stillstand des Rotors (12a) des Ventilators.

8. Maschine nach einem der Ansprüche 1 bis 5, dadurch gekennzeichnet, daß, wenn der Rotor (26a) des Staubsauggebläses und der Rotor (12a) des Ventilators durch gesonderte Motoren (12,25) angetrieben werden, Verzögerungsmittel vorgesehen sind, die die vorübergehende weitere Rotation des Rotors (26a) des Staubsauggebläses nach dem Stillstand des Rotors (12a) des Ventilators (12b) erlauben.

9. Maschine nach einem der Ansprüche 1 bis 8, dadurch gekennzeichnet, daß die im Boden (10) des Behälters (1) angebrachte Öffnung regelbar ist.

## Claims

1. Shredding and grinding machine having a compartment (1) into which the products to be treated are introduced and which is equipped, in its top part (7), with an access opening sealed by a cover (9), rotating shredding and/or grinding tools (13) near the base, and at the base at least one calibrated opening allowing the particles obtained to pass downwards, the machine comprising in addition, under the perforated base of the compartment (1), an exhaust (12b) which sucks in the air and the particles coming from the compartment and produced by the shredding tools, and a duct (14) which connects the outlet from the exhaust (12b) to a cyclone (15) in which the particles are collected in the lower part and in which the air collected in the upper part can be recycled in the top part (7) of the compartment by means of a recirculating duct (17), characterised in that the said machine comprises, parallel to the said access opening, a chute (2) for tipping the products to be treated into the said compartment (1), the said chute (2) comprising two normally closed flaps (3, 4) together defining an airlock (5) and arranged so as to be opened one after the other by the products to be treated when they are tipped into the said compartment (1), the airlock thus formed having a suction hood (21) connected to a dust extractor (23) equipped with a filter bag (24).

2. Machine according to Claim 1, characterised in that the air outlet from the cyclone (15) returning to the compartment (1) is equipped with a coarse filter with a low pressure drop (20) such as a mesh.

3. Machine according to one of Claims 1 or 2, characterised in that the inlet (18) for the recirculation of air in the top part (7) of the compartment (1) is able to be closed by a shutter (19) functioning as a non-return valve in the direction of the flow of air into the compartment (1).

4. Machine according to one of Claims 1 to 3, characterised in that the flow of recirculation air (18) into the top part (7) of the compartment (1) is able to be closed off by a shutter (29) controlled from the outside.

5. Machine according to one of Claims 1 to 4, characterised in that the inlet flap (3) into the airlock (5) is returned to the closed position by a component such as a spring or counterweight acting against the negative pressure created in the airlock (5) by the extractor (23).

6. Machine according to one of Claims 1 to 5, characterised in that the rotor (26a) of the dust extractor (23) is mounted on the same shaft (11) as the exhaust rotor (12a) and shredding tools (13).

7. Machine according to Claim 6, characterised in that the rotor (26a) of the dust extractor is equipped with mechanical time-delay means such as an inertial weight (26a) and a free wheel (26c) enabling it to continue to rotate temporarily after the exhaust rotor (12a) has stopped.

8. Machine according to one of Claims 1 to 5, characterised in that, when the rotor (26a) of the dust extractor and the rotor (12a) of the exhaust are driven by separate motors (12, 25), time-delay means are provided which are able to cause the rotation of the rotor (26a) of the dust extractor to continue temporarily after the rotor (12a) of the exhaust (12b) has stopped.

9. Machine according to one of Claims 1 to 8, characterised in that the opening in the base (10) of the compartment (1) is adjustable.
